# EUROPEAN PATENT SPECIFICATION

(11) **EP 1 158 725 B1**
(45) Date of publication and mention of the grant of the patent: **27.08.2008**
(21) Application number: 01112006.0
(22) Date of filing: 23.05.2001
(51) Int. Cl.: H04L 12/56

(54) **Method and apparatus for multi- redundant router protocol support**
Verfahren und Vorrichtung zur Mehrfach- Routerredundanzprotokolls Unterstützung
Procédé et dispositif supportant multi-protocoles du type routeur redondance

(30) Priority: 24.05.2000 US 206617 P; 24.05.2000 US 206996 P; 24.07.2000 US 220335 P; 13.09.2000 US 232479 P
(43) Date of publication of application: 28.11.2001
(73) Proprietor: Alcatel Internetworking (PE), Inc., Spokane, Washington 99206 (US)
(72) Inventor: Michels, Timothy S, Gilroy, CA 95020 (US); Clear, David, San Jose, CA 95123 (US); Cathey, Jim, Green Acres, Washington 99016 (US)
(74) Representative: Schmidt, Werner Karl

(56) References cited:
- US-A- 5 473 599
- US-A- 5 550 816
- LI ET AL: "Cisco Hot Standby Router Protocol (HSRP)" REQUEST FOR COMMENTS (RFC) 2281, [Online] March 1998 (1998-03), pages 1-17, XP002269653 Retrieved from the Internet: <URL:http://www.faqs.org/ftp/rfc/pdf/rfc22 81.txt.pdf> [retrieved on 2004-02-10]
- KNIGHT ET AL: REQUEST FOR COMMENTS (RFC) 2338, [Online] April 1998 (1998-04), pages 1-27, XP002269654 Retrieved from the Internet: <URL:http://www.faqs.org/ftp/rfc/pdf/rfc23 38.txt.pdf> [retrieved on 2004-02-10]

## Description

### FIELD OF THE INVENTION

The present invention is related to redundant routing, and particularly to a method and apparatus for providing multi-protocol redundant router protocol support.

### BACKGROUND OF THE INVENTION

Redundant routing protocols have been developed to provide hosts configured with static routes a measure of protection against router failure. In redundant routing, a host is configured to send to a virtual router MAC address that is supported by two or more physical routers sharing a LAN with the host. Particularly, at any given time in an operational cycle, one of the physical routers, a virtual master, is responsible for forwarding packets received from the host and having the virtual router MAC address, and the other backup routers standby to assume forwarding responsibilities in the event the virtual master fails. The transition by which respective ones of the backup routers become the virtual master is transparent to the host.

US 5,473,599 discloses an embodiment of a redundant routing protocol.

In addition to their failure recovery characteristics, redundant routing protocols can be used advantageously in LANs having two or more hosts to achieve load sharing. In a load sharing arrangement, at least two hosts are assigned different ones of virtual router MAC addresses such that different ones of the physical routers become the initial virtual master for the different ones of the hosts.

While redundant router protocols have clear advantages, adding redundant router protocol hardware support to routers is typically expensive. Additional caching facilities are typically required on the participating physical routers to store the 48-bit MAC addresses for the active virtual routers. This implementation cost has been exacerbated by the existence of two competing (and non-interoperable) redundant routing protocols: Hot Standby Router Protocol (HSRP), specified in Internet Engineering Task Force (IETF) Request for Comment (RFC) 2281 and Virtual Router Redundancy Protocol (VRRP) specified in IETF RFC 2338.

Therefore, it is desirable to provide efficient redundant router protocol support in general, and multi-protocol redundant router protocol support, in particular.

These objects are solved by the local area network (LAN) of claim 1, by the method of routing a plurality of packets according to claim 10, and by the router of claim 18.

### SUMMARY OF THE INVENTION

In one embodiment of the present invention, a local area network (LAN) is provided. The LAN includes a plurality of hosts, a plurality of physical routers and a LAN medium interconnecting the hosts and the physical routers. A first one of the hosts applies a packet of a first redundant router protocol type to the LAN medium and a second one of the hosts applies a packet of a second redundant router protocol type to the LAN medium. The physical routers determine responsibility for forwarding a packet received on the LAN medium in function of a redundant router protocol type of the packet.

In another embodiment of the present invention, a method of routing a plurality of packets using a plurality of redundant routing protocols is provided. A router receives a packet having a packet address. A prefix of the packet address is compared with a first predefined value to determine whether the packet is of a first redundant routing protocol type. The prefix of the packet address is compared with a second predefined value to determine whether the packet is of a second redundant routing protocol type.

In yet another embodiment of the present invention, a router for receiving and forwarding one or more packets is provided. The router includes a first comparator for comparing a packet address prefix and a first predefined value to determine whether the packet is of a first redundant router protocol type. The router also includes a second comparator for comparing the packet address prefix and a second predefined value to determine whether the packet is of a second redundant router protocol type.

### BREIF DESCRIPTION OF THE DRAWINGS

These and other aspects of the invention may be understood by reference to the following detailed description, taken in conjunction with the accompanying drawings, which are briefly described below.
FIG. 1 is a system diagram of an apparatus for supporting both the HSRP and VRRP protocols according to an embodiment of the present invention;
FIG. 2 illustrates a network environment including a packet switching node, such as a router, according to an embodiment of the present invention;
FIG. 3 is a block diagram of a switching interface according to an embodiment of the present invention;
FIG. 4 is a packet switching controller according to an embodiment of the present invention;
FIG. 5 is a schematic diagram illustrating a process of determining whether the incoming data unit is of the type HSRP or VRRP according to an embodiment of the present invention; and
FIG. 6 is a flow diagram illustrating a process of determining whether the incoming data unit is of the type HSRP or VRRP according to an embodiment of the present invention.

### DETAILED DESCRIPTION

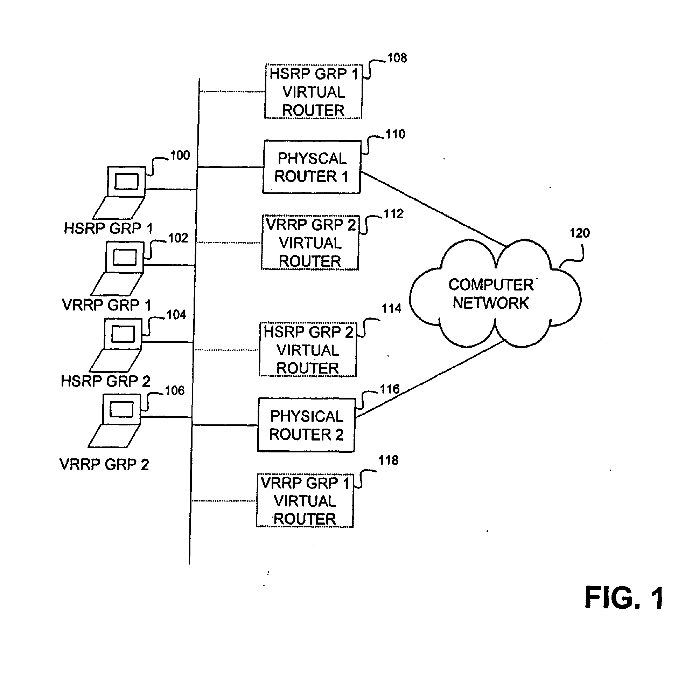

FIG. 1 is a system diagram of an apparatus for supporting both HSRP and VRRP protocols according to an embodiment of the present invention. In FIG. 1, a local area network (LAN) includes a plurality of hosts 100, 102, 104, 106 and a plurality of routers 110, 116, which are physical (as opposed to virtual) routers. The routers 110 and 116 are coupled to a computer network 120. The routers 110, 116 may be viewed as being coupled to the LAN to provide gateway to the computer network 120. In other embodiments, the routers 110, 116 may be coupled to one or more LANs other than the LAN of FIG. 1.

The computer network 120, for example, may include the Internet or other global or local computer networks. The routers 110 and 116 may also be coupled to one or more other LANs (not shown). The LANs in this and other embodiments may have one or more different configurations including, but not limited to, Ethernet (IEEE 802.3), token ring (IEEE 802.5) and FDDI (ANSI X3T9.5).

The hosts 100 and 104 preferably are associated with a group of redundant routers HSRP Group 1 and HSRP Group 2, respectively. The hosts 102 and 106 are associated with a group of redundant routers VRRP Group1 and VRRP Group 2, respectively. It should be noted that the hosts and routers of FIG. 1 are shown for illustrative purposes only. In practice, the LAN may include one or more additional hosts and routers belonging to HSRP Groups 1 and/or 2, VRRP Groups 1 and/or 2, and/or other HSRP and/or VRRP groups. The redundant routers in each group share a common virtual router address, which is assigned to one or more hosts associated with the group of redundant routers.

The virtual router addresses may include a Media Access Control (MAC) address, a network address (e.g., IP address) or both. When the host assigned to a virtual router address transmits one or more data units (e.g., Ethernet frames, IP packets or ATM cells) to be routed, the data units are directed to one of the redundant routers in the group that is acting as the virtual master for that particular group.

For example, data units from the host 100 preferably are routed by an HSRP Group 1 virtual router 108, data units from the host 102 preferably are routed by a VRRP Group 1 virtual router 118, data units from the host 104 preferably are routed by an HSRP Group 2 virtual router 114, and data units from the host 106 preferably are routed by a VRRP Group 2 virtual router 112.

Since the HSRP and VRRP virtual routers 108, 112, 114 and 118 are not physical routers, their virtual router addresses preferably are mapped to the routers 110 and 116. For example, in an embodiment according to the present invention, the router 110 preferably is configured as an HSRP Group 1 virtual master and a VRRP Group 2 virtual master. For another example, the router 116 is configured as a VRRP Group 1 virtual master and an HSRP Group 2 virtual master. Virtual masters may also be referred to as active routers, virtual router masters or Masters.

In FIG. 1, the routers 110 and 116 are illustrated to be supporting four groups of virtual routers (i.e., HSRP Group 1 virtual router, VRRP Group 2 virtual router, HSRP Group 2 virtual router, and VRRP Group 1 virtual router). Therefore, for example, when the router 110 operates as the HSRP Group 1 virtual master and the VRRP Group 2 virtual master, the router 116 may operate as an HSRP Group 1 standby router and a VRRP Group 2 standby router. For another example, when the router 116 operates as the HSRP Group 2 virtual master and the VRRP Group 1 virtual master, the router 110 may operate as an HSRP Group 2 standby router and a VRRP Group 1 standby router. Standby routers may also be referred to as backup routers. In other embodiments, each physical router may be mapped to one HSRP group of redundant routers and one VRRP group of redundant routers.

In practice, for example, each of the routers 110 and 116 may support up to four HSRP virtual router groups and up to four VRRP virtual router groups simultaneously on up to 512 different LANs. In other embodiments, each of the routers 110 and 116 may support more than four HSRP virtual router groups and more than four VRRP virtual router groups simultaneously on 512 or more different LANs.

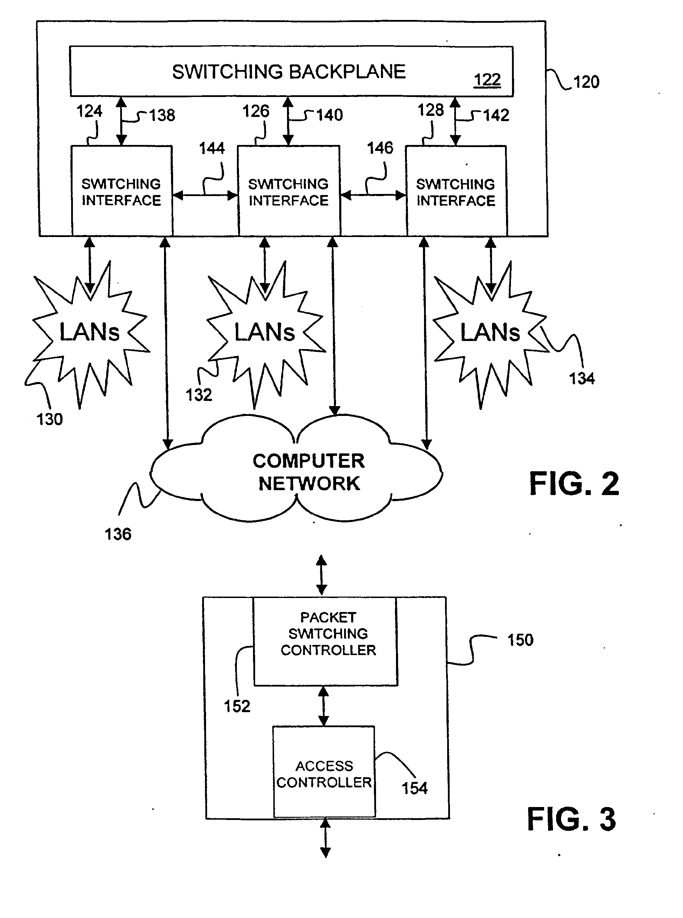

In FIG. 2, a network environment including a packet switching node 120 is illustrated. The packet switching node 120, for example, may be used as one or both of the routers 110 and 116. The packet switching node 120 includes a number of switching interfaces 124, 126, 128 preferably interconnected to respective groups of LANs 130, 132, 134 and preferably interconnected to each other over data paths 138, 140, 142 via a switching backplane 122 and over control paths 144, 146.

The switching interfaces 124, 126, 128 preferably forward packets to and from their respective groups of LANs 130, 132, 134 in accordance with one or more operative communication protocols, such as, for example, media access control (MAC) bridging and Internet Protocol (IP) routing. The switching interfaces 124, 126 and 128 preferably communicate with other packet switching nodes over a computer network 136, which may include the Internet and/or other global or local computer networks.

FIG. 3 is a block diagram of a switching interface 150, which may be similar to one or more of the switching interfaces 124, 126 and 128. The switching interface 150 includes an access controller 154 coupled between the LANs and a packet switching controller 152. The access controller 154 preferably receives inbound packets off LANs, performs flow-independent physical and MAC layer operations on the inbound packets and transmits the inbound packets to the packet switching controller 152 for flow-dependent processing. The access controller 154 preferably also receives outbound packets from the packet switching controller 152, preferably performs physical and MAC layer operations on the outbound packets and transmits the outbound packets on the LANs or to a computer network, such as, for example, the computer network 136 of FIG. 2.

The packet switching controller 152 preferably receives inbound packets, classifies the packets, generates application data for the inbound packets, modifies the inbound packets in accordance with the application data, and transmits the modified inbound packets on a switching backplane, such as, for example, the switching backplane 122 of FIG. 2. The packet switching controller 152 preferably also receives outbound packets from other packet switching controllers over the backplane, and transmits the outbound packets to the access controller 154 for forwarding on the LANs or to the computer network, such as, for example, the compute network 136 of FIG. 2. In other embodiments, the packet switching controller 152 may also subject one or more outbound packets to egress processing prior to forwarding them to the access controller 154. The packet switching controller 152 may be implemented in non-programmable logic, programmable logic or any combination of programmable and non-programmable logic.

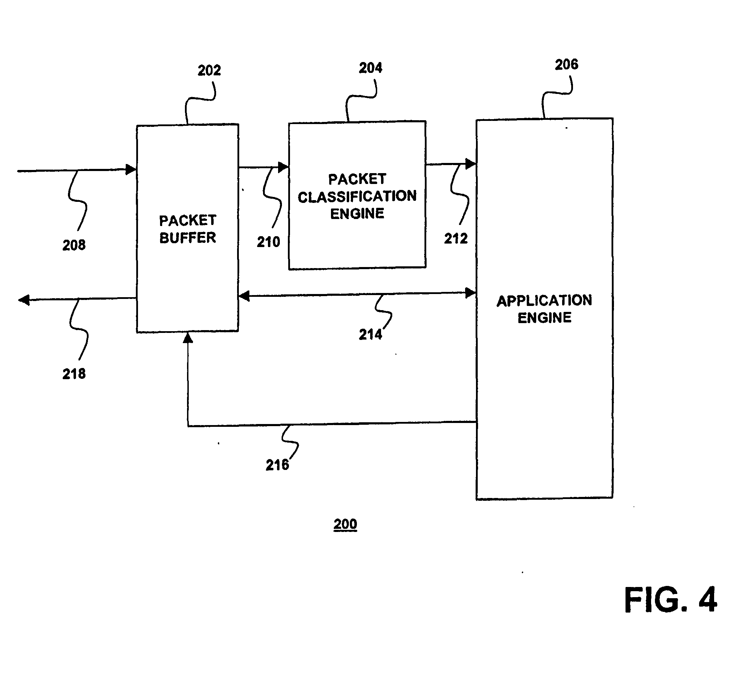

FIG. 4 is a block diagram of a programmable packet switching controller 200 according to an embodiment of the present invention. The programmable packet switching controller 200, for example, may be similar to the packet switching controller 152 of FIG. 3. The programmable packet switching controller 200 preferably has flow resolution logic for classifying and routing incoming flows of packets. Packet switching controllers in other embodiments may include more or less number of components. For example, a packet switching controller in another embodiment may include a pattern match module for comparing packet portions against a predetermined pattern to look for a match. The packet switching controller in yet another embodiment may include an edit module for editing inbound packets to generate outbound packets. Further, packet switching controllers in still other embodiments may include other components, such as, for example, a policing engine, in addition to or instead of the components included in the programmable packet switching controller 200.

Due to its programmable nature, the programmable packet switching controller 200 preferably provides flexibility in handling many different protocols and/or field upgradeability. The programmable packet switching controller 200 may also be referred to as a packet switching controller, a switching controller, a programmable packet processor, a network processor, a communications processor or as another designation commonly used by those skilled in the art.

The programmable packet switching controller 200 includes a packet buffer 202, a packet classification engine 204, and an application engine 206. The programmable packet switching controller 200 preferably receives inbound packets 208. The packets (or data units) may include, but are not limited to, Ethernet frames, ATM cells, TCP/IP and/or UDP/IP packets, and may also include other Layer 2 (Data Link/MAC Layer), Layer 3 (Network Layer) or Layer 4 (Transport Layer) data units. For example, the packet buffer 202 may receive inbound packets from one or more Media Access Control (MAC) Layer interfaces over the Ethernet.

The received packets preferably are stored in the packet buffer 202. The packet buffer 202 may include a packet FIFO for receiving and temporarily storing the packets. The packet buffer 202 preferably provides the stored packets or portions thereof to the packet classification engine 204 and the application engine 206 for processing.

The packet buffer 202 may also include an edit module for editing the packets prior to forwarding them out of the switching controller as outbound packets 218. The edit module may include an edit program construction engine for creating edit programs real-time and/or an edit engine for modifying the packets. The application engine 206 preferably provides application data 216, which may include a disposition decision for the packet, to the packet buffer 202, and the edit program construction engine preferably uses the application data to create the edit programs. The outbound packets 218 may be transmitted over a switching fabric interface to communication networks, such as, for example, the Ethernet.

The packet buffer 202 may also include either or both a header data extractor and a header data cache. The header data extractor preferably is used to extract one or more fields from the packets, and to store the extracted fields in the header data cache as extracted header data. The extracted header data may include, but are not limited to, some or all of the packet header. In an Ethernet system, for example, the header data cache may also store first N bytes of each frame.

The extracted header data preferably is provided in an output signal 210 to the packet classification engine 204 for processing. The application engine may also request and receive the extracted header data over an interface 214. The extracted header data may include, but are not limited to, one or more of Layer 2 MAC addresses, 802.1P/Q tag status, Layer 2 encapsulation type, Layer 3 protocol type, Layer 3 addresses, ToS (type of service) values and Layer 4 port numbers. In other embodiments, the output signal 210 may include the whole inbound packet, instead of or in addition to the extracted header data. In still other embodiments, the packet classification engine 204 may be used to edit the extracted header data to be placed in a format suitable for use by the application engine, and/or to load data into the header data cache.

The packet classification engine 204 preferably includes a programmable microcode-driven embedded processing engine. The packet classification engine 204 preferably is coupled to an instruction RAM (IRAM) (not shown). The packet classification engine preferably reads and executes instructions stored in the IRAM. In one embodiment, many of the instructions executed by the packet classification engine are conditional jumps. In this embodiment, the classification logic includes a decision tree with leaves at the end points that preferably indicate different types of packet classifications. Further, branches of the decision tree preferably are selected based on comparisons between the conditions of the instructions and the header fields stored in the header data cache. In other embodiments, the classification logic may not be based on a decision tree.

In one embodiment of the present invention, the application engine 206 preferably has a pipelined architecture wherein multiple programmable sub-engines are pipelined in series. Each programmable sub-engine preferably performs an action on the packet, and preferably forwards the packet to the next programmable sub-engine in a "bucket brigade" fashion. The packet classification engine preferably starts the pipelined packet processing by starting the first programmable sub-engine in the application engine using a start signal 212. The start signal 212 may include identification of one or more programs to be executed in the application engine 206. The start signal 212 may also include packet classification information. The programmable sub-engines in the application engine preferably have direct access to the header data and the extracted fields stored in the header data cache over the interface 214.

The application engine may include other processing stages not performed by the programmable sub-engines, however, the decision-making stages preferably are performed by the programmable sub-engines to increase flexibility. In other embodiments, the application engine may include other processing architectures.

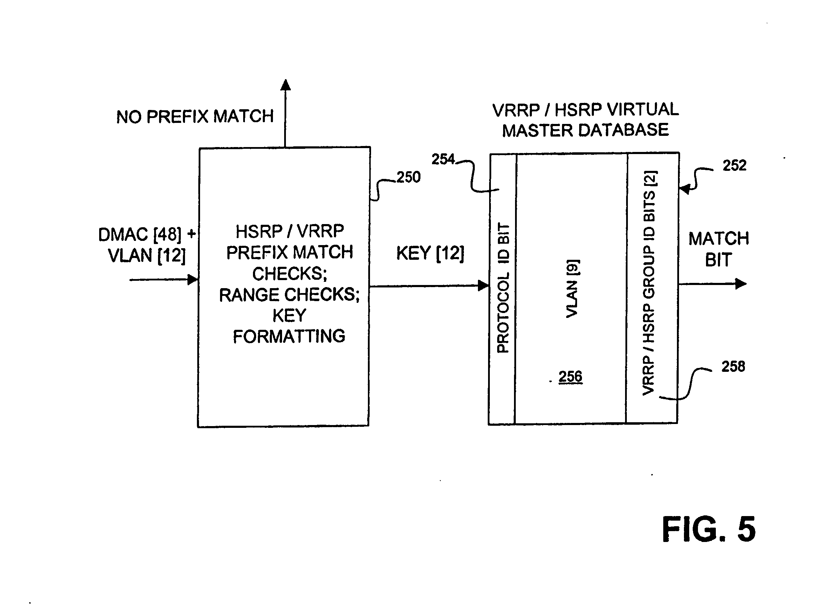

FIG. 5 is a schematic diagram illustrating a process of determining whether the incoming data unit is of the type HSRP or VRRP, according to an embodiment of the present invention. The schematic diagram of FIG. 5 includes a prefix match block 250 and a database table 252. The prefix match block 250 may be included in a packet classification engine, such as, for example, the packet classification engine 204 of FIG. 4. In other embodiments, the prefix match block 250 may be included in an application engine, such as, for example, the application engine 206 of FIG. 4.

The database table 254 preferably includes a bit table, which is indexed by protocol selection (HSRP or VRRP), VLAN number (or VLAN ID/address) and group number (or group ID) to yield a single bit result. In other embodiments, the database table 254 may be in other table format and other parameters may be used to index the table. The result yielded by the database table 254 may include multiple bits in other embodiments. The database table 254 may be included in the application engine or it may be implemented in memory external to the application engine.

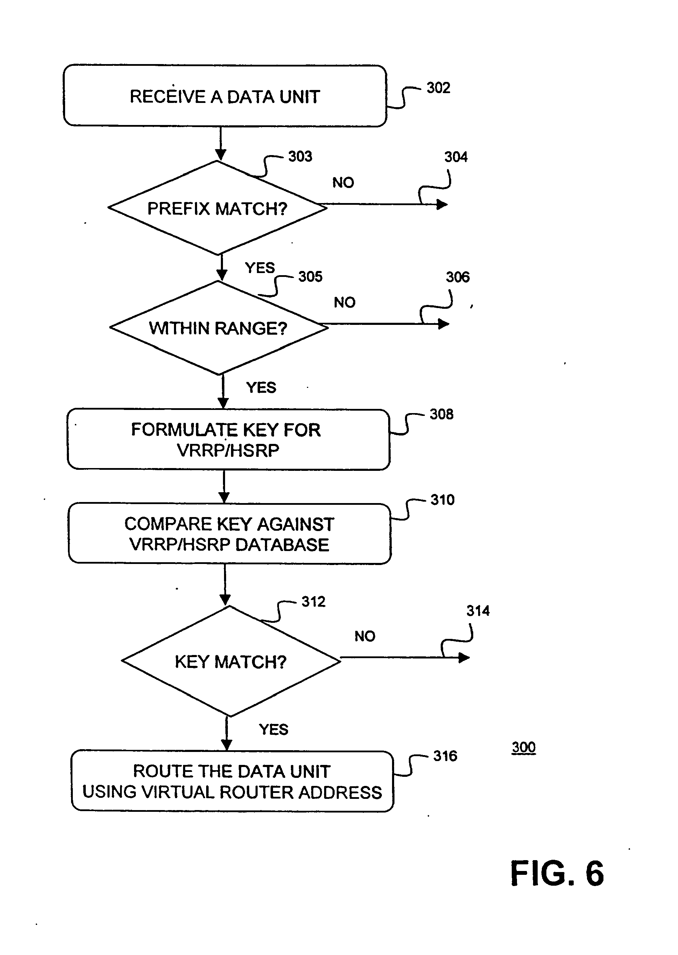

FIG. 5 may be described in reference to FIG. 6. FIG. 6 is a flow diagram illustrating a process of determining whether the incoming data unit is of the type HSRP or VRRP according to an embodiment of the present invention. In step 302, the process receives a data unit. The data unit includes a destination address, which may include a destination Media Access Control (DMAC) address an/or a Virtual Local Area Network (VLAN) ID. An exemplary DMAC address and VLAN ID illustrated in FIG. 5 contains 48 bits and 12 bits, respectively.

In step 303, the prefix match block 250 preferably is used to determine whether the received data unit is of the type HSRP or VRRP. Each of the HSRP and VRRP router MAC addresses includes an IEEE 802 MAC address, and has predefined 40-bit prefix with an 8-bit group suffix. For example, the virtual MAC address for an HSRP group may be 00-00-0C-07-AC-XX, where each of 00, 0C, 07 and AC is an 8-bit hexadecimal number and XX is an 8-bit group ID for the HSRP group. For another example, the virtual MAC address for an VRRP group may be 00-00-5E-00-01-XX, wherein each of 00, 5E and 01 is an 8-bit hexadecimal number and XX is an 8-bit group ID for the VRRP group. If the first 40 bit prefix of the received DMAC matches 40-bit prefix for neither HSRP nor VRRP, the process indicates no prefix match in a decision 304. If there is no prefix match, the data unit may not have been directed to one of the virtual routers.

In step 305, the prefix match block 250 preferably also checks the VLAN ID and the VRRP/HSRP group ID of the received data unit to determine whether they are within a predetermined range of values. For example, in the embodiment where a router may support up to 512 different LANs simultaneously, the value of the VLAN ID should be between 0 and 511, inclusive. For another example, in the embodiment where a router may support up to four HSRP groups and/or four VRRP groups simultaneously, the value of the VRRP/HSRP group ID should be between 0 and 3, inclusive. If either the VLAN ID or the VRRP/HSRP group ID is not within their respective range of values, the process indicates out of range in a decision 306. If either the VLAN ID or the VRRP/HSRP group ID is out of range, the data unit may be routed using software, but typically at a slower rate.

In other embodiments, additional number of different LANs and/or additional number of VRRP/HSRP groups may be supported. For example, up to 4096 different LANs may be supported using all 12 bits of a 12-bit VLAN ID and up to 256 VRRP/HSRP groups may be supported using all 8 bits of an 8-bit group ID.

In step 308, the prefix match block 250 preferably formats a key for matching in the database table 252. In the exemplary embodiment illustrated in FIG. 5, the key contains 12 bits. In other embodiments, the key may include more or less number of bits than 12. The key preferably includes a protocol ID 254, a VLAN address 256 and a group ID 258. The protocol ID 254 preferably is a single bit identification of either HSRP or VRRP. The VLAN address 256 preferably includes nine least significant bits (LSBs) of the 12-bit VLAN ID for the received data unit. The group ID preferably includes two bits to signify either the VRRP or HSRP group ID.

Using the 12-bit key, the router including the prefix match block of the described embodiment is capable of processing HSRP and VRRP packets concurrently with up to 4 groups of each type on up to 512 VLANs. In other embodiments, the number of bits in the protocol ID 254, the VLAN address 256 and/or the group ID 258 may be different, and may result in different HSRP and/or VRRP packet processing capabilities. In still other embodiments, the number of bits in the protocol ID, the VLAN address and/or the group ID may be programmable to support different number of redundant router protocols (e.g., protocols other than HSRP and VRRP may be defined in the future) and/or virtual router addresses.

In step 310, the key preferably is compared against one or more entries in the database table 252. The data base table may include VRRP/HSRP database, which may also be referred to as VRRP/HSRP virtual master database. If the key does not match any of the entries in the database table 252, the router containing the database table is not operating (314) as the virtual master for the host that transmitted the data unit. If the key matches an entry in the database table, a match bit is generated to indicate that the router is operating as the virtual master. The data unit preferably is routed (or switched) using the virtual router address when the key matches, as indicated in step 316.

It will be appreciated by those of ordinary skill in the art that the invention can be embodied in other specific forms. The present description is therefore considered in all respects to be illustrative and not restrictive. The scope of the invention is indicated by the appended claims.

For example, the described embodiments of the present invention have been described in reference to use of multi-protocol redundant router protocol support in programmable packet switching controllers. However, the multi-protocol redundant router protocol support of the present invention may also be applied to non-programmable, e.g., hard-wired, packet switching controllers.

## Claims

1. A local area network LAN comprising:
a plurality of hosts (100, 102, 104, 106);
a plurality of physical routers (110, 116); and
a LAN medium interconnecting the hosts and the physical routers;
a first one of the hosts is adapted to apply a packet of a first redundant router protocol type to the LAN medium,
**characterized in that**
a second one of the hosts is adapted to apply a packet of a second redundant router protocol type to the LAN medium wherein the first and the second redundant router protocols are non-interoperable;
each of the physical router (110, 116) is capable of concurrently routing packets of the first redundant router protocol type and the second redundant router protocol type;
the physical routers (110, 116) are adapted to compare a destination address prefix of an incoming packet and a first predefined value to determine whether the incoming packet is of the first redundant router protocol type;
the physical routers (110, 116) are adapted to compare the destination address prefix of an incoming packet and a second predefined value to determine whether the incoming packet is of the second redundant router protocol type; and
the physical routers (110, 116) are adapted to determine responsibility for forwarding a packet received on the LAN medium as a function of the determined redundant router protocol type of the packet.

2. The LAN according to claim 1, wherein the first redundant router protocol type is Virtual Router Redundancy Protocol VRRP and the second redundant router protocol type is Hot Standby Router Protocol HSRP.

3. The LAN according to claim 1, wherein the plurality of hosts include one or more groups of hosts, and wherein the first host belongs to a first group of hosts having configured thereon a virtual router address of the first redundant router protocol type.

4. The LAN according to claim 3, wherein the second host belongs to a second group of hosts having configured thereon a virtual router address of the second redundant router protocol type.

5. The LAN according to claim 3, wherein the groups of hosts include a third group of hosts having configured thereon another virtual router address of the first redundant router protocol type.

6. The LAN according to claim 4, wherein the groups of hosts include a fourth group of hosts having configured thereon another virtual router address of the second redundant router protocol type.

7. The LAN according to claim 1, wherein at least one of the physical routers (110, 116) is adapted to perform matching between prefix MAC address bits for at least one packet and predefined prefix bits for at least one of the first and second redundant router protocol types.

8. The LAN according to claim 7, wherein at least one of the physical routers (110, 116) is adapted to route the packet using the virtual router address of the first redundant router protocol type if the prefix MAC address bits for the packet matches the pre-defined prefix bits for the first redundant router protocol type.

9. The LAN according to claim 8, wherein at least one of the physical routers (110, 116) is adapted to route the packet using the virtual router address of the second redundant router protocol type if the prefix MAC address bits for the packet matches the pre-defined prefix bits for the second redundant router protocol type.

10. A method for concurrently routing a plurality of packets using a plurality of non-interoperable redundant routing protocol types at a router, the method comprising the steps of:
receiving into the router (110, 116) a packet having a packet address
determining whether the received packet is of a first or a second redundant router protocol type by comparing (303) a prefix of the destination address of the received packet with a first predefined value to determine whether the packet is of the first redundant router protocol type and comparing (303) the prefix of the destination address of the received packet with a second predefined value to determine whether the packet is of the second redundant router protocol type; and
determining responsibility for forwarding the received packet as a function of the determined redundant router protocol type.

11. The method of routing according to claim 10, wherein the packet address includes a Media Access Control MAC address.

12. The method of routing according to claim 11, wherein the MAC address contains 48 bits, the prefix contains 40 bits and the first and second predefined values each contains 40 bits.

13. The method of routing according to claim 10, wherein the method further comprises, if the packet is of the first or the second redundant router protocol type, the step of formulating (308) a key to search a database table (252) to determine if the router is responsible for forwarding the packet.

14. The method of routing according to claim 13, wherein the key includes a protocol ID to indicate the redundant router protocol type for the packet.

15. The method of routing according to claim 13, wherein the key includes a VLAN address.

16. The method of routing according to claim 13, wherein the key includes a group ID to indicate a redundant router protocol group ID associated with the packet.

17. The method of routing according to claim 13, wherein the packet is routed (316) using a virtual router address.

18. A router for a local area network LAN, said LAN comprising a plurality af hosts (100, 102, 104, 106), a plurality of physical routers (110, 116), and a LAN medium interconnecting the hosts and the physical routers;
the router (110, 116) is adapted to receive packets of a first redundant router protocol type
**characterized in that**
the router (110, 116) is adapted to also receive packets of a second redundant router protocol type, wherein the first and the second redundant router protocol types are non-interoperable;
the router (110, 116) is adapted for concurrently routing packets of the first redundant router protocol type and the second redundant router protocol type;
the router (110, 116) comprises first compare means (250) for comparing a destination address prefix of a received packet and a first predefined value to determine whether the received packet is of the first redundant router protocol type;
the router (110, 116) comprises second compare means (250) for comparing the destination address prefix of the received packet and a second predefined value to determine whether the received packet is of the second redundant router protocol type; and
the router is adapted to determine responsibility for forwarding the packet received on the LAN medium as a function of the determined redundant router protocol type.

19. The router (110, 116) according to claim 18, the router further comprising means for determining whether the router is responsible for forwarding the packet.

20. The router (110, 116) according to claim 19, wherein the router is adapted to forward the packet using a virtual router address, wherein the virtual router address includes a MAC address and a VLAN ID.

21. The router (110, 116) according to claim 18, wherein the first compare means (250) and the second compare (250) means are implemented in a programmable packet switching controller (200).

22. The router (110, 116) according to claim 18, wherein the first compare means and the second compare means are implemented in a hard-wired packet switching controller (152).

23. The router (110, 116) according to claim 18, further comprising prefix match means (250) for determining whether the packet is of a redundant router protocol type.

24. The router according to claim 18, further comprising range check means (250) for determining whether at least one of VLAN ID and redundant router protocol group ID is within a predetermined range.

## Patentansprüche

1. Ein lokales Netz, LAN, umfassend:
Eine Vielzahl von Hosts (100, 102, 104, 106);
eine Vielzahl von physikalischen Routern (110, 116): und
ein LAN-Medium, welches die Hosts und die physikalischen Router miteinander verbindet;
wobei ein erster der Hosts fähig ist, ein Paket eines ersten Routerredundanzprotokoll-Typs auf ein LAN-Medium aufzulegen,
**dadurch gekennzeichnet, dass**
ein zweiter der Hosts fähig ist, ein Paket eines zweiten Routerredundanzprotokoll-Typs auf ein LAN-Medium aufzulegen, wobei das erste und das zweite Routerredundanzprotokoll nicht interoperabel sind;
ein jeder der physikalischen Router (110, 116) fähig ist, Pakete des ersten Routerredundanzprotokoll-Typs und des zweiten Routerredundanzprotokoll-Typs gleichzeitig weiterzuleiten;
die physikalischen Router (110, 116) fähig sind, einen Präfix einer Zieladresse eines eingehenden Pakets mit einem ersten vorgegebenen Wert zu vergleichen, um zu ermitteln, ob das eingehende Paket dem ersten Routerredundanzprotokoll-Typ entspricht;
die physikalischen Router (110, 116) fähig sind, den Präfix einer Zieladresse eines eingehenden Pakets mit einem zweiten vorgegebenen Wert zu vergleichen, um zu ermitteln, ob das eingehende Paket dem zweiten Routerredundanzprotokoll-Typ entspricht;
die physikalischen Router (110, 116) fähig sind, die Zuständigkeit für die Übertragung eines an dem LAN-Medium empfangenen Pakets als eine Funktion des ermittelten Routerredundanzprotokoll-Typs des Pakets zu bestimmen.

2. Das LAN nach Anspruch 1, wobei der erste Routerredundanzprotokoll-Typ ein virtuelles Routerredundanzprotokoll, VRRP, und der zweite Routerredundanzprotokoll-Typ ein Hot-Standby-Routerprotokoll, HSRP, ist.

3. Das LAN nach Anspruch 1, wobei die Vielzahl von Hosts eine oder mehrere Gruppen von Hosts umfasst, und wobei der erste Host einer ersten Gruppe von Hosts angehört, auf denen eine virtuelle Routeradresse des ersten Routerredundanzprotokoll-Typs konfiguriert ist.

4. Das LAN nach Anspruch 3, wobei der zweite Host einer zweiten Gruppe von Hosts angehört, auf denen eine virtuelle Routeradresse des zweiten Routerredundanzprotokoll-Typs konfiguriert ist.

5. Das LAN nach Anspruch 3, wobei die Gruppen von Hosts eine dritte Gruppe von Hosts umfasst, auf denen eine andere virtuelle Routeradresse des ersten Routerredundanzprotokoll-Typs konfiguriert ist.

6. Das LAN nach Anspruch 4, wobei die Gruppen von Hosts eine vierte Gruppe von Hosts umfasst, auf welchen eine andere virtuelle Routeradresse des zweiten Routerredundanzprotokoll-Typs konfiguriert ist.

7. Das LAN nach Anspruch 1, wobei mindestens einer der physikalischen Router (110, 116) fähig ist, ein Matching zwischen den Präfix-Bits der MAC-Adresse für mindestens ein Paket und den vorgegebenen Präfix-Bits für mindestens einen der ersten und zweiten Routerredundanzprotokoll-Typen auszuführen.

8. Das LAN nach Anspruch 7, wobei mindestens einer der physikalischen Router (110, 116) fähig ist, das Paket mit der virtuellen Routeradresse des ersten Routerredundanzprotokoll-Typs weiterzuleiten, wenn die Präfix-Bits der MAC-Adresse für das Paket den vorgegebenen Präfix-Bits für den ersten Routerredundanzprotokoll-Typ entsprechen.

9. Das LAN nach Anspruch 8, wobei mindestens einer der physikalischen Router (110, 116) fähig ist, das Paket mit der virtuellen Routeradresse des zweiten Routerredundanzprotokoll-Typs weiterzuleiten, wenn die Präfix-Bits der MAC-Adresse für das Paket den vorgegebenen Präfix-Bits für den zweiten Routerredundanzprotokoll-Typ entsprechen.

10. Ein Verfahren zum gleichzeitigen Weiterleiten einer Vielzahl von Paketen mit einer Vielzahl von nicht interoperablen Routerredundanzprotokoll-Typen an einem Router, wobei das Verfahren folgende Schritte umfasst:
Empfangen eines mit einer Paketadresse versehenen Pakets in dem Router (110, 116)
Ermitteln, ob das empfangene Paket einem ersten oder einem zweiten Routerredundanzprotokoll-Typ entspricht, durch Vergleichen (303) eines Präfix der Zieladresse des empfangenen Pakets mit einem ersten vorgegebenen Wert, um zu ermitteln, ob das Paket dem ersten Routerredundanzprotokoll-Typ entspricht, und durch Vergleichen (303) des Präfix der Zieladresse des empfangenen Pakets mit einem zweiten vorgegebenen Wert, um zu ermitteln, ob das Paket dem zweiten Routerredundanzprotokoll-Typ entspricht; und
Ermitteln der Zuständigkeit für die Übertragung des empfangenen Pakets als eine Funktion des ermittelten Routerredundanzprotokoll-Typs.

11. Das Routing-Verfahren nach Anspruch 10, wobei die Paketadresse eine Medienzugriffssteuerungs-, MAC,-Adresse enthält.

12. Das Routing-Verfahren nach Anspruch 11, wobei die MAC-Adresse 48 Bits, der Präfix 40 Bits und der erste und der zweite vorgegebene Wert jeweils 40 Bits enthält.

13. Das Routing-Verfahren nach Anspruch 10, wobei, wenn das Paket dem ersten oder dem zweiten Routerredundanzprotokoll-Typ entspricht, das Verfahren weiterhin den Schritt des Formulierens (308) eines Schlüssels zum Suchen einer Datenbasistabelle (252) umfasst, um zu ermitteln, ob der Router für die Übertragung des Pakets zuständig ist.

14. Das Routing-Verfahren nach Anspruch 13, wobei der Schlüssel eine Protokoll-ID für die Angabe des Routerredundanzprotokoll-Typs für das Paket enthält.

15. Das Routing-Verfahren nach Anspruch 13, wobei der Schlüssel eine VLAN-Adresse enthält.

16. Das Routing-Verfahren nach Anspruch 13, wobei der Schlüssel eine Gruppen-ID für die Angabe einer dem Paket zugeordneten Routerredundanzprotokoll-Gruppen-ID umfasst.

17. Das Routing-Verfahren nach Anspruch 13, wobei das Paket mit einer virtuellen Routeradresse weitergeleitet (316) wird.

18. Ein Router für ein lokales Netz, LAN, wobei das besagte LAN eine Vielzahl von Hosts (100, 102, 104, 106), eine Vielzahl von physikalischen Routern (110, 116) und ein LAN-Medium, welches die Hosts und die physikalischen Router miteinander verknüpft, umfasst;
wobei der Router (110, 116) fähig ist, Pakete eines ersten Routerredundanzprotokoll-Typs zu empfangen,
**dadurch gekennzeichnet, dass**
der Router (110, 116) fähig ist, ebenfalls Pakete eines zweiten Routerredundanzprotokoll-Typs zu empfangen, wobei der erste und der zweite Routerredundanzprotokoll-Typ nicht interoperabel sind;
wobei der Router (110, 116) fähig ist, Pakete des ersten Routerredundanzprotokoll-Typs und des zweiten Routerredundanzprotokoll-Typs gleichzeitig weiterzuleiten;
wobei der Router (110, 116) erste Vergleichsmittel (250) zum Vergleichen eines Präfix einer Zieladresse eines empfangenen Pakets mit einem ersten vorgegebenen Wert umfasst, um zu ermitteln, ob das empfangene Paket dem ersten Routerredundanzprotokoll-Typ entspricht;
wobei der Router (110, 116) zweite Vergleichsmittel (250) zum Vergleichen eines Präfix einer Zieladresse des empfangenen Pakets mit einem zweiten vorgegebenen Wert umfasst, um zu ermitteln, ob das empfangene Paket dem zweiten Routerredundanzprotokoll-Typ entspricht; und
wobei der Router fähig ist, die Zuständigkeit für die Übertragung des an dem LAN-Medium empfangenen Pakets als eine Funktion des ermittelten Routerredundanzprotokoll-Typs zu bestimmen.

19. Der Router (110, 116) nach Anspruch 18, wobei der Router weiterhin Mittel zum Ermitteln, ob der Router für die Übertragung des Pakets zuständig ist, umfasst.

20. Der Router (110, 116) nach Anspruch 19, wobei der Router fähig ist, das Paket unter Verwendung einer virtuellen Routeradresse zu übertragen, wobei die virtuelle Routeradresse eine MAC-Adresse und eine VLAN-ID enthält.

21. Der Router (110, 116) nach Anspruch 18, wobei das erste Vergleichsmittel (250) und das zweite Vergleichsmittel (250) in einer programmierbaren Paketvermittlungssteuerung (200) implementiert werden.

22. Der Router (110, 116) nach Anspruch 18, wobei das erste Vergleichsmittel und das zweite Vergleichsmittel in einer fest verdrahteten Paketvermittlungssteuerung (152) implementiert werden.

23. Der Router (110, 116) nach Anspruch 18, welcher weiterhin Präfix-Match-Mittel (250) umfasst, um zu ermitteln, ob das Paket einem Routerredundanzprotokoll-Typ entspricht.

24. Der Router nach Anspruch 18, welcher weiterhin Range-Check-Mittel (250) umfasst, um zu ermitteln, ob sich mindestens entweder die VLAN-ID oder die Routerredundanzprotokoll-Gruppen-ID innerhalb eines vorgegebenen Bereichs befindet.

## Revendications

1. Réseau Local Etendu comprenant :
une pluralité d'hôtes (100, 102, 104, 106) ;
une pluralité de routeurs physiques (110, 116) ; et
un support LAN Interconnectant les hôtes et les routeurs physiques ;
un premier des hôtes est apte à appliquer un paquet d'un premier type de protocole de routeur redondant au support LAN,
**caractérisé en ce que**
un second des hôtes est apte à appliquer un paquet d'un second type de protocole de routeur redondant au support LAN dans lequel les premiers et second protocoles de routeurs redondants sont non interopérables ;
le routeur physique (110, 116) est capable de router simultanément chacun des paquets du premier type de protocole de routeur redondant et du second type de protocole de routeur redondant ;
les routeurs physiques (110, 116) sont aptes à comparer un préfixe d'adresse de destination d'un paquet entrant et une première valeur prédéfinie pour déterminer si le paquet entrant est du premier type de protocole de routeur redondant ;
les routeurs physiques (110, 116) sont aptes à comparer le préfixe d'adresse de destination d'un paquet entrant et une seconde valeur prédéfinie pour déterminer si le paquet entrant est du second type de protocole de routeur redondant ; et
les routeurs physiques (110, 116) sont aptes à déterminer la responsabilité de transmettre un paquet reçu sur le support LAN en fonction du type de protocole de routeur redondant déterminé du paquet.

2. Réseau Local Étendu selon la revendication 1, dans lequel le premier type de protocole de routeur redondant est le protocole de redondance de routeur virtuel VRRP et le second type de protocole de routeur redondant est le protocole de routeur de secours automatique HSRP.

3. Réseau Local Étendu selon la revendication 1, dans lequel la pluralité d'hôtes incluent un ou plusieurs groupes d'hôtes, et dans lequel le premier hôte appartient à un premier groupe d'hôtes ayant sur lesquels est configurée une adresse de routage virtuel du premier type de protocole de routeur redondant.

4. Réseau Local Etendu selon la revendication 3, dans lequel le second ordinateur hôte appartient à un deuxième groupe d'hôtes sur lesquels est configurée une adresse de routage virtuel du second type de protocole de routeur redondant.

5. Réseau Local Etendu selon la revendication 3, dans lequel les groupes d'hôtes incluent un troisième groupe d'hôtes sur lesquels est configurée une autre adresse de routage virtuel du premier type de protocole de routeur redondant.

6. Réseau Local Etendu selon la revendication 4, dans lequel les groupes d'hôtes incluent un quatrième groupe d'hôtes sur lesquels est configurée une autre adresse de routage virtuel du second type de protocole de routeur redondant.

7. Réseau Local Étendu selon la revendication 1, dans lequel au moins l'un des routeurs physiques (110, 116) est apte à effectuer une correspondance entre les bits de préfixe de l'adresse MAC pour au moins un paquet et des bits de préfixe prédéfini pour au moins un élément parmi les premier et second types de protocole de routeur redondant.

8. Réseau Local Étendu selon la revendication 7, dans lequel au moins l'un des routeurs physiques (110, 116) est apte à router le paquet en utilisant l'adresse de routage virtuel du premier type de protocole de routeur redondant si les bits de préfixe de l'adresse MAC pour le paquet correspondent aux bits de préfixe prédéfini pour le premier type de protocole de routeur redondant.

9. Réseau Local Étendu selon la revendication 8, dans lequel au moins l'un des routeurs physiques (110, 116) est apte à router le paquet en utilisant l'adresse de routage virtuel du second type de protocole de routeur redondant si les bits de préfixe de l'adresse MAC pour le paquet correspondent aux bits de préfixe prédéfini pour le second type de protocole de routeur redondant.

10. Procédé permettant de router simultanément une pluralité de paquets en utilisant une pluralité de types de protocole non interopérable de routage redondant au niveau d'un routeur, le procédé comprenant les étapes suivantes :
recevoir dans le routeur (110, 116) un paquet ayant une adresse de paquet
déterminer si le paquet reçu est d'un premier ou d'un second type de protocole de routeur redondant en comparant (303) un préfixe de l'adresse de destination du paquet reçu avec une première valeur prédéfinie pour déterminer si le paquet est du premier type de protocole de routeur redondant (303) et en comparant le préfixe de l'adresse de destination du paquet reçu avec une seconde valeur prédéfinie pour déterminer si le paquet est du second type de protocole de routeur redondant ; et
déterminer la responsabilité de transmettre le paquet reçu en fonction du type de protocole de routeur redondant déterminé.

11. Procédé de routage selon la revendication 10, dans lequel l'adresse de paquet inclut une adresse MAC (Contrôle d'Accès au Support).

12. Procédé de routage selon la revendication 11, dans lequel l'adresse MAC contient 48 bits, le préfixe contient 40 bits et les première et seconde valeurs prédéfinies contiennent chacun 40 bits.

13. Procédé de routage selon la revendication 10, dans lequel le procédé comprend en outre, si le paquet est du premier ou du second type de protocole de routeur redondant, l'étape de formulation (308) d'une clé pour rechercher une table de base de données (252) afin de déterminer si le routeur est chargé de transmettre le paquet.

14. Procédé de routage selon la revendication 13, dans lequel la clé inclut un identificateur de protocole pour indiquer le type de protocole de routeur redondant pour le paquet.

15. Procédé de routage selon la revendication 13, dans lequel la clé inclut une adresse de Réseau Local Virtuel.

16. Procédé de routage selon la revendication 13, dans lequel la clé inclut un identificateur de groupe pour indiquer un identificateur de groupes de protocoles de routeurs redondants associé au paquet.

17. Procédé de routage selon la revendication 13, dans lequel le paquet est routé (316) en utilisant une adresse de routage virtuel.

18. Router pour un Réseau Local Étendu, ledit Réseau Local Étendu comprenant une pluralité d'hôtes (100, 102, 104, 106), une pluralité de routeurs physiques (110, 116), et un support LAN interconnectant les hôtes et les routeurs physiques ;
le routeur (110, 116) est apte à recevoir des paquets d'un premier type de protocole de routeur redondant
**caractérisé en ce que**
le routeur (110, 116) est apte à recevoir également des paquets d'un second type de protocole de routeur redondant, dans lequel les premier et second types de protocole de routeur redondant sont non interopérables ;
le routeur (110, 116) est apte à router simultanément les paquets de routage du premier type de protocole de routeur redondant et du second type de protocole de routeur redondant ;
le routeur (110, 116) inclut des premiers moyens de comparaison (250) pour comparer un préfixe d'adresse de destination d'un paquet reçu et une première valeur prédéfinie pour déterminer si le paquet reçu est du premier type de protocole de routeur redondant ;
le routeur (110, 116) inclut des seconds moyens de comparaison (250) pour comparer le préfixe d'adresse de destination du paquet reçu et une seconde valeur prédéfinie pour déterminer si le paquet reçu est du second type de protocole de routeur redondant ; et
le routeur est apte à déterminer la responsabilité de transmettre le paquet reçu sur le support LAN en fonction du type de protocole de routeur redondant déterminé.

19. Routeur (110, 116) selon la revendication 18, le routeur comprenant en outre des moyens pour déterminer si le routeur est chargé de transmettre le paquet.

20. Routeur (110, 116) selon la revendication 19, dans lequel le routeur est apte à transmettre le paquet en utilisant une adresse de routage virtuel, dans lequel l'adresse de routage virtuel inclut une adresse MAC et un identificateur de Réseau Local Virtuel.

21. Routeur (110, 116) selon la revendication 18, dans lequel les premiers moyens de comparaison (250) et les seconds moyens de comparaison (250) sont mis en oeuvre dans un contrôleur de commutation par paquets programmable (200).

22. Routeur (110, 116) selon la revendication 18, dans lequel les premiers moyens de comparaison et les seconds moyens de comparaison sont mis en oeuvre dans un contrôleur de commutation par paquets fixe (152).

23. Routeur (110, 116) selon la revendication 18, comprenant en outre des moyens de correspondance de préfixe (250) pour déterminer si le paquet est d'un type de protocole de routeur redondant.

24. Routeur selon la revendication 18, comprenant en outre des moyens de contrôle (250) pour déterminer si au moins un élément parmi un identificateur VLAN et un identificateur de groupes de protocoles de routeurs redondants est à l'intérieur d'une plage prédéterminée.
